# EUROPÄISCHE PATENTSCHRIFT

(11) **EP 2 108 525 B1**
(45) Veröffentlichungstag und Bekanntmachung des Hinweises auf die Patenterteilung: **10.08.2011**
(21) Anmeldenummer: 09154822.2
(22) Anmeldetag: 11.03.2009
(51) Int. Cl.: B60C 1/00, B60C 11/00

(54) **Fahrzeugluftreifen**
Pneumatic tyres for a vehicle
Pneus de véhicule

(30) Priorität: 11.04.2008 DE 102008018341
(43) Veröffentlichungstag der Anmeldung: 14.10.2009
(73) Patentinhaber: Continental Reifen Deutschland GmbH, 30165 Hannover (DE)
(72) Erfinder: Weber, Christian, 30826 Garbsen (DE); Kramer, Thomas, 31832 Springe (DE); Carl, Wilfried, 12159 Berlin (DE)
(74) Vertreter: Finger, Karsten

(56) Entgegenhaltungen:
- EP-A- 0 105 822
- EP-A- 0 715 974
- EP-A- 0 818 501

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, dessen profilierter Teil zumindest drei in radialer Richtung übereinander angeordnete Schichten aufweist, deren Gummizusammensetzungen sich bezüglich ihres Anteiles an Butadien-Kautschuk voneinander unterscheiden, wobei die radial äußerste Schicht den größten Anteil an Butadien-Kautschuk aufweist und der Anteil an Butadien-Kautschuk in den darunter befindlichen Schichten in Richtung Reifeninneres sukzessive geringer ist.

Ein derartiger Fahrzeugluftreifen ist aus der EP-A-0 105 822 bekannt. Der Laufstreifen besteht aus mindestens drei Lagen, wobei jede dieser Lagen einen oder mehrere Bestandteil(e) aufweist, ausgewählt aus der Gruppe, die natürliches cis-14-Polyisopren, Ruß und Synthesekautschuk enthält. Die am weitesten innen liegende Lage weist einen Rückprallwert von 82 % bis 96 % gemäß ASTM D1054, die am weitesten außen liegende Lage eine Rückprallwert von 64 % bis 74 % gemäß ASTM D1054 auf, die dazwischen liegenden Lagen haben Rückprallwerte, die zwischen den genannten Rückprallwerten liegt. In der radial äußersten Lage können in der Gummizusammensetzung zwischen 70 phr und 100 phr-Styren-Butadien-Kautschuk enthalten sein. Der derart schichtweise aufgebaute Laufstreifen soll in den inneren Lagen eine erhöhte Wärmebeständigkeit und in den äußeren Lagen eine erhöhte Abriebsbestündigkeit aufweisen.

Aus der EP-A-1 308 319 ist ein in Radialbauart ausgeführter Fahrzeugluftreifen, insbesondere für Personenkraftwagen, bekannt, dessen Laufstreifen einen Laufstreifenunterteil und einen Laufstreifenoberteil aufweist, welcher mindestens zwei sich in ihrer Mischungszusammensetzung unterscheidende Abschnitte aufweist. Der die Außenschulter des Laufstreifens umfassende Abschnitt des Laufstreifenoberteils besteht aus einer Mischung mit einer höheren Glasübergangstemperatur als der die Innenschulter umfassende Abschnitt des Laufstreifenoberteils. Ein Reifen mit einem derart aufgebauten Laufstreifen soll sowohl bezüglich seiner Winterperformance als auch bezüglich seiner Nässeperformance verbessert sein.

Aus der EP-B-0 864 447 ist ein Fahrzeugluftreifen bekannt, welcher einen Laufstreifen aufweist, der ebenfalls in zumindest zwei in Unfangsrichtung umlaufende Abschnitte geteilt ist, die aus unterschiedlichen Gummizussmmensetzungen bestehen. Der eine Abschnitt enthält einen verstärkenden Füllstoff mit mindestens 40% Ruß, der zweite Abschnitt enthält einen Anteil an weißem Füllstoff, und zwar zumindest 20% der Gesamtmenge des verwendeten verstärkenden Füllstoffs. Die Differenz zwischen den Hysteresewerten bei 70°C der beiden Abschnitte entspricht mindestens 10% des höreren Wertes.

Die DE-A-100 14 892 offenbart einen Fahrzeugluftreifen, insbesondere einen Winterreifen für Personenkraftwagen, mit einem profilierten Laufstreifen, welcher sich in radialer Richtung aus mehreren Schichten aus zwei Laufstreifenmischungen mit unterschiedlichem Abriebswiderstand zusammensetzt. Die sehr dünn ausgeführten Schichten weisen eine Schichtdicke von weniger als 1 mm auf und sind lamellenartig nebeneinander und alternierend angeordnet sowie miteinander vulkanisiert, wobei die Grenzflächen der Schichten im Wesentlichen der Profilkontur folgen. Dadurch soll ein Fahrzeugluftreifen zur Verfügung gestellt werden, dessen Wintereigenschaften mit abnehmender Profiltiefe weniger stark beeinträchtigt werden als bei bekannten Fahrzeugluftreifen.

Es ist bekannt, in Laufstreifenmischungen einen gewissen Anteil an Synthesekautschuk, insbesondere Butadien-Kautschuk, vorzusehen, um die Abriebsfestigkeit des Laufstreifen zu erhöhen. Eine Erhöhung des Füllstoffanteils in der Mischung führt ebenfalls zu einer Verbesserung der Abriebsfestigkeit, hat jedoch den Nachteil, dass der Wärmeaufbau im Laufstreifen stark ansteigt. Abriebsfeste Laufstreifenmischungen werden vor allem in Laufstreifen von Nutzfahrzeugreifen verwendet, die auf Antriebsachsen eingesetzt werden, wobei neben einer hohen Abriebsfestigkeit und einem geringen Rollwiderstand auch eine gute Traktion erwünscht sind. Durch die Forderung nach guten Traktionseigenschaften solcher Reifen sind dem Anteil an abriebsfesten Kautschuktypen, insbesondere Butadien-Kautschuk, im profilierten Teil des Laufstreifens Grenzen gesetzt.

Der Erfindung liegt die Aufgabe zugrunde, Laufstreifen von Nutzfahrzeugreifen, insbesondere von Antriebsachsreifen, derart auszuführen, dass gute Traktionseigenschaften bei hoher Abriebsfestigkeit und geringem Rollwiderstand gewährleistet sind.

Gelöst wird die gestellte Aufgabe erfindungsgemäß dadurch, dass in der radial äußersten Schicht der Anteil an Butadien-Kautschuk 15 phr bis 40 phr, insbesondere bis 30 phr, beträgt.

Bei erfindungsgemäß ausgeführten Reifen nimmt daher während des Abriebes des Laufstreifens die Abriebsfestigkeit ab, die Traktions- und Bremseigenschaften verhalten sich gegenläufig. Zu Beginn des Reifenlebens mit voller Profiltiefe liefert das Profil selbst einen großen Beitrag zu Traktion, demnach ist es möglich, in der radial äußersten Schicht einen höheren Anteil an Butadien-Kautschuk einzusetzen als in jenen Schichten, die bei abgefahrenen Laufstreifen mit dem Untergrund in Kontakt kommen. Für die Gesamteigenschaften des Laufstreifens ist dies von Vorteil: Mit abnehmender Profiltiefe verbessert sich durch den abnehmenden Anteil an Butadien-Kautschuk die Traktion des Laufstreifens, während der Einfluss des Profils auf die Traktion sinkt. Auf diese Weise werden die Vorteile einer durch einen Butadien-Kautschuk-Anteil abriebsfesteren Mischung ohne Zielkonflikte nutzbar. In der radial äußersten Schicht beträgt der Anteil an Butadien-Kautschuk 15 phr bis 40 phr, insbesondere bis 30 phr. Bei neuem Reifen kommt daher eine sehr abriebsfeste Schicht mit dem Untergrund in Kontakt, wobei infolge der vollen Profiltiefe auch die Brems- und Traktionseigenschaften des Reifens zufriedenstellend sind.

In der radial innersten Schicht beträgt der Anteil an Butadien-Kautschuk zwischen Null und 20 phr. Damit sind bei abgefahrenem Laufstreifen gute Traktionseigenschaften sicher gestellt.

Die Schichten im Laufstreifen können zumindest im Wesentlichen übereinstimmende Dicken aufweisen. Um den Laufstreifen während der Lebensdauer des Reifens auf bestimmte Eigenschaften besser abzustimmen, können die Schichtdicken auch unterschiedlich sein.

In den Gummizusammensetzungen der einzelnen Schichten ist als weiterer Kautschuk insbesondere Naturkautschuk enthalten. Dieser Kautschuktyp hat sich in Laufstreifen gut bewährt. Dabei beträgt der Anteil an Naturkautschuk in den Schichten ≥ 60 phr, ferner der Anteil an Ruß in den Schichten zwischen 30 phr und 60 phr, insbesondere zwischen 40 phr und 50 phr, und der Anteil an Weichmacheröl ≤ 5 phr. Neben Natur- und Butadien- Kautschuk können auch noch andere Polymere in geringen Mengen, bis zu 20 phr, in der Gummizusammensetzung eingesetzt werden. Neben Ruß können andere Füllstoffe in geringen Mengen von bis zu 20 phr, beispielsweise Silika, insbesondere in einem Anteil von bis zu 10 phr, zugesetzt werden.

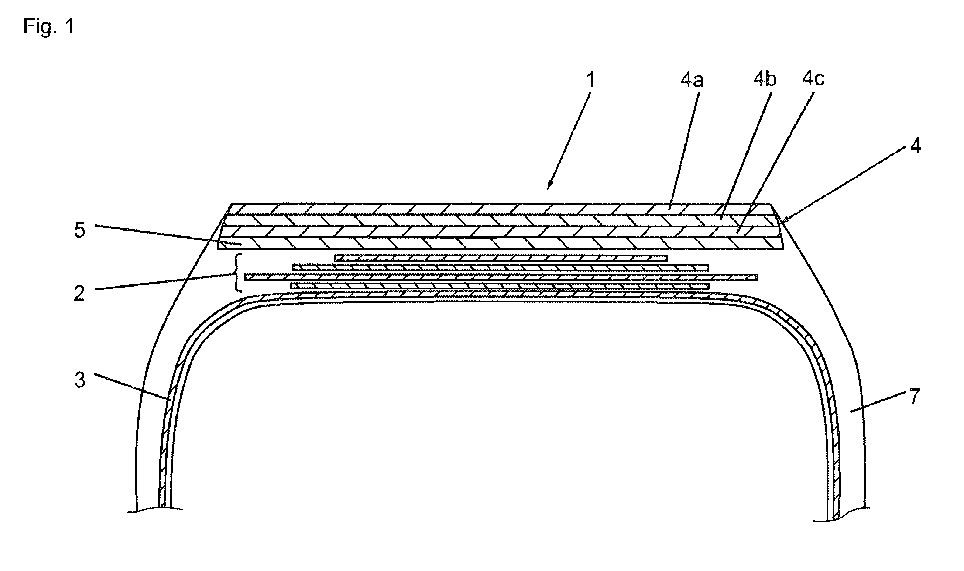

Weitere Merkmale, Vorteile und Einzelheiten der Erfindung werden nun anhand von Ausführungsbeispielen näher beschrieben. Die einzige Zeichnungsfigur, Fig. 1, zeigt dabei eine Ausführungsform der Erfindung, wobei ein Querschnitt durch einen Fahrzeugluftreifen in Bereich des Laufstreifens dargestellt ist.

Fig. 1 zeigt einen vereinfachten Querschnitt durch den Laufstreifenbereich eines Fahrzeugluftreifens für Nutzfahrzeuge, wobei von den üblichen Bauteilen des Reifens ein Laufstreifen 1, ein Gürtel 2 bestehend aus vier Gürtellagen mit in Gummi eingebetteten, vorzugsweise aus Stahlkord bestehenden Festigkeitsträgern und eine ebenfalls mit Festigkeitsträgern versehene Radialkarkasse 3 dargestellt sind. Von den Seitenwänden 7 des Reifens sind lediglich die radial äußeren Endabschnitte gezeigt, Nicht dargestellt sind Wulstbereiche mit Wulstkernen, Kernprofilen und sonstigen Wulstbauteilen.

Der Laufstreifen 1 ist in bekannter Weise in einen Laufstreifenoberteil 4 und einen Laufstreifenunterteil 5 geteilt. Der Laufstreifenunterteil 5 weist eine im Wesentlichen konstante Stärke in der Größenordnung von 2 mm bis 3 mm auf und besteht insbesondere aus einer für Laufstreifenunterteile von Nutzfahrzeugreifen üblichen Gummizusammensetzung. Der Laufstreifenoberteil 4 ist jener Teil des Laufstreifens 1, welcher mit einer in der Figur nicht gezeigten Profilierung aus Umfangsnuten, Quernuten, Einschnitten und dergleichen versehen ist.

Der Laufstreifenoberteil 4 ist in radialer Richtung aus zumindest drei übereinander angeordneten und insbesondere übereinstimmend dick ausgeführten Schichten 4a, 4b, 4c aufgebaut. Sind, wie gezeigt, drei Schichten 4a, 4b, 4c vorgesehen, so weist jede dieser Schichten eine Dicke in der Größenordnung von 4 mm bis 9 mm auf. Die Schichten 4a, 4b, 4c unterscheiden sich hinsichtlich ihrer Kautschukzusammensetzung. Die radial äußerste Schicht 4a enthält Butadien-Kautschuk (BR) in einem Anteil von 15 phr bis 40 phr, insbesondere bis zu 30 phr (Anteile bezogen auf 100 Gewichtsteile Kautschuk in der Mischung), die darunter befindliche Schicht 4b enthält einen geringeren Anteil an Butadien-Kautschuk, insbesondere von 10 phr bis 30 phr, die radial innerste Schicht 4c enthält entweder keinen Butadien-Kautschuk oder einen Anteil Butadien-Kautschuk von bis zu 20 phr, wobei der Anteil an Butadien-Kautschuk geringer ist als jener in der darüber befindlichen Schicht 4b. Werden mehr als drei Schichten, insbesondere bis zu sieben Schichten, im Laufstreifenoberteil 4 vorgesehen, so wird der Anteil an Butadien-Kautschuk in den einzelnen Schichten, von der radial äußersten Schicht bis zur radial innersten Schicht sukzessive verringert und kann in der radial innersten Schicht auch Null betragen. Als weitere Kautschukkomponente, gegebenenfalls als einzige Kautschukkomponente in der radial innersten Schicht 4c, ist in den einzelnen Mischungszusammensetzungen vorzugsweise Naturkautschuk enthalten.

Die einzelnen Mischungsschichten können bei der Herstellung des Rohreifens beispielsweise durch Koextrusion oder durch ein Auflegen der einzelnen Schichten über den Umfang des auf einer Reifenaufbautrommel befindlichen Rohreifens aufgebracht werden.

In der nachstehenden Tabelle 1 sind Mischungskonzepte für die einzelnen Schichten 4a, 4b und 4c des Laufstreifenoberteils 4 angegeben. Die anschließende Tabelle 2 enthält konkretere Beispiele für Mischungen für die Schichten 4a, 4b und 4c. Neben Butadien - Kautschuk enthalten die Mischungen Naturkautschuk. Zusätzlich zu Natur- und Butadien- Kautschuk können auch noch andere Polymere in geringen Mengen, bis zu 20 phr, in den Kautschukmischungen eingesetzt werden. Neben Ruß können andere Füllstoffe in geringen Mengen von bis zu 20 phr zugesetzt werden, beispielsweise Silika, insbesondere in einem Anteil von bis zu 10 phr. Zu den weiteren, gesondert nicht angeführten Bestandteilen der Mischungen gehören Weichmacheröl in einem Anteil ≤ 5phr sowie die üblichen Zusatzstoffe, wie Zinkoxid, Schwefel, Beschleuniger, Verarbeitungshilfsmittel und Alterungsschutzmittel. Ihre Anteile entsprechen den für Mischungen in Laufstreifen von Fahrzeugluftreifen üblichen Anteilen. Die Weichmacheröle können zum Beispiel Mineralöle, wie DAE, RAE, TDAE, MES, oder naphthenische Öle sein. Aus den Mischungen wurden vulkanisierte Prüfkörper hergestellt, die zur Bestimmung der Rückprallelastizität bei Raumtemperatur und des Abriebes getestet wurden. Die ermittelten Werte sind in Tabelle 2 enthalten, wobei folgende Messverfahren angewandt wurden:
Rückprallelastizität bei Raumtemperatur: Gemäß DIN 53 512
Abrieb:
   Groschabrieb: Ein freirollendes Prüfrad mit der zu untersuchenden Probe läuft auf einer rotierenden Schleifscheibe unter einem eingestellten Schräglaufwinkel bei vorgegebener Last, Geschwindigkeit und Strecke. Bei verschiedenen Prüfbedingungen wird die Menge an abgeriebener Mischung als Maß für den Abrieb gemessen.

**Tabelle 1**

| **Anteile in phr** | **Mischungskonzept Schicht 4a** | **Mischungskonzept Schicht 4b** | **Mischungskonzept Schicht 4c** |
|---|---|---|---|
| BR | 15 - 40 | 10 - 30 | bis 20 |
| NR | 60 - 70 | 70 - 80 | bis 100 |
| Ruß | 30 - 60 | 30 - 60 | 30 - 60 |
| Andere Polymere | 0 - 20 | 0 - 20 | 0 - 20 |
| (z.B. SSBR) | | | |
| Weitere Füllstoffe | 0 - 20 | 0 - 20 | 0 - 20 |
| (z.B. Silika) | | | |
| Weichmacheröle | 0 - 5 | 0 - 5 | 0 - 5 |

**Tabelle 2**

| **Anteile in phr** | **Mischungsbeispiel Schicht 4a** | **Mischungsbeispiel Schicht 4b** | **Mischungsbeispiel Schicht 4c** |
|---|---|---|---|
| BR | 40 | 20 | 0 |
| NR | 60 | 80 | 100 |
| Ruß | 46 | 46 | 46 |
| Abrieb | 130% | 115% | 100% |
| Rückprall (RT) | 50 | 48 | 46 |

Aus den in Tabelle 2 enthaltenen Abriebsresultaten und Rückprallwerten ist ersichtlich, dass ein höherer BR-Gehalt den Abrieb verbessert, wobei der Rückprallwert bei Raumtemperatur höher ist. Der Rückprallwert bei Raumtemperatur ist ein Maß für den Nassgriff, wobei gilt, dass ein höherer Rückprallwert bei Raumtemperatur einem schlechteren Nassgriff entspricht. Durch die Verringerung des BR-Anteiles in den Schichten des Laufstreifenoberteils wird der Laufstreifenoberteil bei fortschreitendem Abrieb weniger abriebsfest, wobei sich gleichzeitig die Nässeeigenschaften verbessern. Bei neuem Reifen, mit voller Profiltiefe, liefert das Laufstreifenprofil einen großen Beitrag zur Traktion. Es ist daher möglich, in der äußersten Schicht des Laufstreifenoberteils einen höheren Anteil an Butadien-Kautschuk vorzusehen, ohne die Traktion des Reifens zu beeinträchtigen. Durch die Verringerung des Anteiles an Butadien-Kautschuk bei fortschreitendem Abrieb verringert sich der Einfluss des Profils - die Profiltiefe wird ja ebenfalls geringer - wobei sich die Traktionseigenschaften durch die Gummizusammensetzung mit geringerem Anteil an Butadien-Kautschuk mehr und mehr verbessern. Somit werden bei der Erfindung die Vorteile der durch ihren Anteil an Butadien-Kautschuk abriebsfesteren Mischung ohne Zielkonflikte ausnutzbar.

Alternativ zu der gezeigten und beschriebenen Ausführung des Laufstreifens aus Laufstreifenoberteil und Laufstreifenunterteil kann auch ein herkömmlicher gemäß der Erfindung im profilierten Teil geschichteter Laufstreifen vorgesehen sein. Die Anzahl der Schichten im profilierten Teil bzw. im Laufstreifenoberteil des Laufstreifens kann wesentlich größer sein als drei, insbesondere bis zu zehn Schichten, gegebenenfalls auch mehr als zehn Schichten.

### Bezugsziffernliste

- 1.........: Laufstreifen
- 2 .........: Gürtel
- 3 .........: Radialkarkasse
- 4.........: Laufstreifenoberteil
- 4a .......: Schicht
- 4b .......: Schicht
- 4c .......: Schicht
- 5..........: Laufstreifenunterteil
- 7.........: Seitenwände

## Patentansprüche

1. Fahrzeugluftreifen, insbesondere für Nutzfahrzeuge, mit einer Radialkarkasse (3), einem mehrlagigen Gürtel (2) und einem Laufstreifen (1), dessen profilierter Teil zumindest drei in radialer Richtung übereinander angeordnete Schichten (4a, 4b, 4c) aufweist, deren Gummizusammensetzungen sich bezüglich ihres Anteiles an Butadien-Kautschuk voneinander unterscheiden, wobei die radial äußerste Schicht (4a) den größten Anteil an Butadien-Kautschuk aufweist und der Anteil an Butadien-Kautschuk in den darunter befindlichen Schichten (4b, 4c) in Richtung Reifeninneres sukzessive geringer ist.
**dadurch gekennzeichnet,**
**dass** in der radial äußersten Schicht (4a) der Anteil an Butadien-Kautschuk 15 phr bis 40 phr, insbesondere bis 30 phr, beträgt.

2. Fahrzeugluftreifen nach Anspruch 1, **dadurch gekennzeichnet, dass** in der radial innersten Schicht (4c) der Anteil an Butadien-Kautschuk zwischen Null und 20 phr beträgt.

3. Fahrzeugluftreifen nach Anspruch 1 oder 2, **dadurch gekennzeichnet, dass** die Schichten (4a, 4b, 4c) zumindest im Wesentlichen übereinstimmende Dicken aufweisen.

4. Fahrzeugluftreifen nach einem der Ansprüche 1 bis 3, **dadurch gekennzeichnet, dass** die einzelnen Schichten (4a, 4b, 4c) als weiteren Kautschuk Naturkautschuk enthalten.

5. Fahrzeugluftreifen nach einem der Ansprüche 1 bis 4, **dadurch gekennzeichnet, dass** der Anteil an Naturkautschuk in den Schichten (4a, 4b, 4c) ≥ 60 phr beträgt.

6. Fahrzeugluftreifen nach einem der Ansprüche 1 bis 5, **dadurch gekennzeichnet, dass** der Anteil an Ruß in den Schichten (4a, 4b, 4c) zwischen 30 phr und 60 phr, insbesondere zwischen 40 phr und 50 phr, beträgt.

7. Fahrzeugluftreifen nach einem der Ansprüche 1 bis 6, **dadurch gekennzeichnet, dass** der Anteil an Silika in den Schichten (4a, 4b, 4c) maximal 20 phr, insbesondere bis zu 10 phr, beträgt.

8. Fahrzeugluftreifen nach einem der Ansprüche 1 bis 7, **dadurch gekennzeichnet, dass** der Anteil an Weichmacheröl in den Schichten (4a, 4b, 4c) ≤ 5 phr beträgt.

## Claims

1. Pneumatic tyre, in particular for commercial vehicles, with a radial carcass (3), a belt (2) having two or more plies, and a tread (1), the profiled portion of which has at least three mutually radially superposed layers (4a, 4b, 4c), the rubber compositions of which differ from one another in their proportion of butadiene rubber, where the radially outmost layer (4a) has the largest proportion of butadiene rubber and the proportion of butadiene rubber in the layers located thereunder (4b, 4c) is successively smaller in the direction of the tyre interior,
**characterized in that**
the proportion of butadiene rubber in the radially outermost layer (4a) is from 15 phr to 40 phr, in particular up to 30 phr.

2. Pneumatic tyre according to Claim 1, **characterized in that** the proportion of butadiene rubber in the radially innermost layer (4c) is from zero to 20 phr.

3. Pneumatic tyre according to Claim 1 or 2, **characterized in that** the thicknesses of the layers (4a, 4b, 4c) are at least in essence the same.

4. Pneumatic tyre according to any of Claims 1 to 3, **characterized in that** the individual layers (4a, 4b, 4c) comprise, as further rubber, natural rubber.

5. Pneumatic tyre according to any of Claims 1 to 4, **characterized in that** the proportion of natural rubber in the layers (4a, 4b, 4c) is ≥ 60 phr.

6. Pneumatic tyre according to any of Claims 1 to 5, **characterized in that** the proportion of carbon black in the layers (4a, 4b, 4c) is from 30 phr to 60 phr, in particular from 40 phr to 50 phr.

7. Pneumatic tyre according to any of Claims 1 to 6, **characterized in that** the proportion of silica in the layers (4a, 4b, 4c) is at most 20 phr, in particular up to 10 phr.

8. Pneumatic tyre according to any of claims 1 to 7, **characterized in that** the proportion of plasticizer oil in the layers (4a, 4b, 4c) is ≤ 5 phr.

## Revendications

1. Bandage pneumatique pour roue de véhicule, en particulier pour véhicules utilitaires, présentant
une carcasse radiale (3), une ceinture multicouche (2) et une bande de roulement (1) dont la zone sculptée présente au moins trois couches (4a, 4b, 4c) disposées l'une sur l'autre dans le sens radial,
les compositions de caoutchouc de ces couches différant l'une de l'autre au niveau de leur proportion de caoutchouc butadiène,
la couche radiale située le plus à l'extérieur (4a) présentant la proportion la plus élevée de caoutchouc butadiène et la proportion de caoutchouc butadiène dans les couches situées en dessous (4b, 4c) se réduisant successivement vers l'intérieur du pneu, **caractérisé en ce que**
la proportion de caoutchouc butadiène dans la couche radiale située le plus à l'extérieur (4a) s'élève de 15 phr à 40 phr et en particulier à 30 phr.

2. Bandage pneumatique pour roue de véhicule selon la revendication 1, **caractérisé en ce que** la proportion de caoutchouc butadiène dans la couche radiale située le plus à l'intérieur (4c) est comprise entre zéro et 20 phr.

3. Bandage pneumatique pour roue de véhicule selon les revendications 1 ou 2, **caractérisé en ce que** les couches (4a, 4b, 4c) présentent des épaisseurs au moins essentiellement concordantes.

4. Bandage pneumatique pour roue de véhicule selon l'une des revendications 1 à 3, **caractérisé en ce que** les différentes couches (4a, 4b, 4c) contiennent comme autre caoutchouc du caoutchouc naturel.

5. Bandage pneumatique pour roue de véhicule selon l'une des revendications 1 à 4, **caractérisé en ce que** la proportion de caoutchouc naturel dans les couches (4a, 4b, 4c) est ≥ 60 phr.

6. Bandage pneumatique pour roue de véhicule selon l'une des revendications 1 à 5, **caractérisé en ce que** la proportion de noir de carbone dans les couches (4a, 4b, 4c) est comprise entre 30 phr et 60 phr et en particulier entre 40 phr et 50 phr.

7. Bandage pneumatique pour roue de véhicule selon l'une des revendications 1 à 6, **caractérisé en ce que** la proportion de silice dans les couches (4a, 4b, 4c) s'élève à au maximum 20 phr et en particulier à 10 phr.

8. Bandage pneumatique pour roue de véhicule selon l'une des revendications 1 à 7, **caractérisé en ce que** la proportion d'huile plastifiante dans les couches (4a, 4b, 4c) est ≤ 5 phr.
